# EUROPEAN PATENT SPECIFICATION

(11) **EP 2 969 260 B1**
(45) Date of publication and mention of the grant of the patent: **14.02.2018**
(21) Application number: 13821421.8
(22) Date of filing: 30.12.2013
(51) Int. Cl.: B05D 7/00, F16C 33/00, B05D 5/08

(54) **ANTI-FRET COATING SYSTEM**
KORROSIONSSCHUTZ-BESCHICHTUNGSSYSTEM
SYSTÈME DE REVÊTEMENT ANTI-USURE

(30) Priority: 15.03.2013 US 201361794435 P
(43) Date of publication of application: 20.01.2016
(73) Proprietor: Rolls-Royce Corporation, Indianapolis, Indiana 46225 (US)
(72) Inventor: NAIK, Subhash K ,, Carmel, Indiana 46033 (US)
(74) Representative: Gille Hrabal
(86) International application number: PCT/US2013/078287
(87) International publication number: WO 2014/143369

(56) References cited:
- EP-A1- 2 330 228
- GB-A- 1 032 833
- GB-A- 2 292 742
- US-A- 3 755 164
- US-A1- 2010 087 346

## Description

### TECHNICAL FIELD

The present disclosure generally relates to an anti-fret coating system, and more particularly to an anti-fret coating system for use on components in gas turbine engines and the like.

### BACKGROUND

Present approaches to providing wear protection and solid lubrication for components in moving contact with one another suffer from a variety of drawbacks, limitations, disadvantages and problems including initial cost, repair cost, durability, environmental degradation and others.

Document GB 2 292 742 discloses a structure comprising a copper based material positioned on a substrate and an intermediate coating layer having fluoride material thereon.

There is a need for the unique and inventive anti-fret coating compositions, systems and methods disclosed herein.

### SUMMARY

The present disclosure may comprise one or more of the following features and combinations thereof.

The present disclosure provides a unique anti-fret coating system for movable components having portions of surfaces in contact with one another. Other embodiments include apparatuses, systems, devices, hardware, methods, and combinations for gas turbine engine dry film lubrication systems. Further embodiments, forms, features, aspects, benefits, and advantages of the present application shall become apparent from the description and figures provided herewith.

In one illustrative aspect of the disclosure an illustrative method is disclosed. The illustrative method illustratively comprises: applying a dry film lubrication system to a basecoat having a copper based material positioned on a substrate, wherein said applying dry film lubrication system includes: applying at least one intermediate coating layer having a calcium fluoride and barium fluoride material in a silicone binder over the basecoat; and applying a top coat layer having a molybdenum disulfide material over the at least one intermediate coating layer.

In another illustrative aspect of the disclosure an illustrative method is disclosed. The illustrative method illustratively comprises: depositing a basecoat made from a copper based compound on a wear surface of a substrate; depositing an intermediate coating layer made from a fluoride based compound on the basecoat; and depositing a top coat made from a molybdenum disulfide based compound on the intermediate coating layer.

In yet another illustrative aspect of the disclosure an illustrative apparatus is disclosed. The illustrative apparatus illustratively comprises: a component having a wear surface; a basecoat having a copper based composition positioned on the wear surface; an intermediate coating including a calcium fluoride and barium fluoride composition positioned on the basecoat; and a top coat including a molybdenum disulfide composition positioned on the intermediate coating.

These and other features of the present disclosure will become more apparent from the following description of the illustrative embodiments.

### BRIEF DESCRIPTION OF THE FIGURES

FIG. 1 is a perspective view of an exemplary fan blade having a contact region wherein an anti-fret coating system can be applied.
FIG. 2 is a schematic illustration of an anti-fret coating system applied in layers to a substrate.

### DETAILED DESCRIPTION OF THE ILLUSTRATIVE EMBODIMENTS

For the purposes of promoting an understanding of the principles of the invention, reference will now be made to the embodiments presented and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

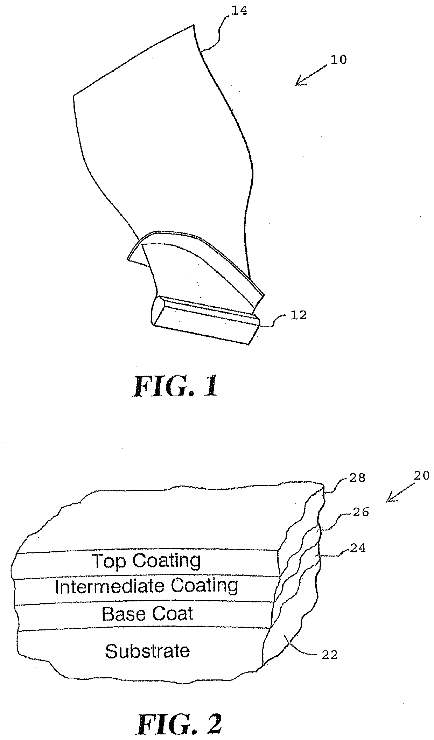

Referring to FIG.1, a fan blade 10 is illustrated as a representative component having a wear surface in a gas turbine engine. The fan blade 10 can have a root section 12 in the form of a dovetail attachment and an airfoil 14 extending radially therefrom. The root section 12 is configured to engage with a slot formed in a fan disk (not shown) such that during operation of the gas turbine engine, portions of the root section 12 can rub against a mating portion of the fan disk causing wear due to fretting and the like. The wear can occur in localized wear regions of each component. Fretting occurs when mating surfaces of engaged components move relative to one another during operation. Typically, the relative movement between components in contact with one another is small such as those caused by vibratory forces, but over time fretting can degrade the wear surface of a component in such a way as to cause operational failure of the component.

The present disclosure provides an anti-fret coating system to reduce or eliminate premature failure of components due to wear caused by fretting and the like. Friction between components can be reduced through dry film lubrication properties provided in the anti-fret coating system such that resulting wear due to fretting is reduced or eliminated under certain operating conditions. The present disclosure also provides for a low cost repair procedure of coating systems such as the anti-fret coating system defined herein. While a fan blade for a gas turbine engine is used as a representative component having a wear surface, it should be understood that any system with a component having a surface that wears due to fretting, rubbing, or other contact means is contemplated for use with the anti-fret coating system defined by the present disclosure.

Gas turbine engines operate at high rotational speeds causing the generation of centrifugal and vibratory forces in select components. These components such as fan blades, fan disks, compressor blades, compressor blades and the like are made from materials such as high strength alloys, super alloys, and composite materials designed to withstand the effects of these forces, however these components have contact regions that can rub and abrade against one another during operation and over time wear due to fretting can cause premature failure of the components.

Wear surfaces of such components can include linear and non-linear profiles. In one example, the wear surface of a curved portion of a blade root can be in contact with the wear surface of a complementary curved portion of a blade slot in the disk. Wear surfaces of portions of other components can have relatively planar surfaces. Component surfaces can have complex profiles allowing for interlocking of mating components. Interlocking components can have contact regions which can include a singular point or extend along a linear path or defined area. The applied forces and rubbing interaction can be complex and variable across the contact region such that the anti-fret coating can have properties to enable it to provide protection over a range of operating conditions.

Referring to FIG. 2, a schematic illustration of an anti-fret coating system 20 applied to a surface of a substrate 22 is shown therein. The anti-fret coating system 20 can include a basecoat 24, one or more intermediate coatings 26, and a top coat 28. The anti-fret coating system 20 can be applied as a plurality of coating layers to protect the substrate 22 from wear caused by fretting and the like. The anti-fret coating system 20 can include a dry film lubrication system defined by one or more of the coating layers having dry lubrication properties applied over the basecoat 24. In one form, the dry film lubrication system can be defined by the top coat 28 of the anti-fret coating system 20. In another form, the dry film lubrication system can be defined by one or more intermediate coating layers 26 in combination with the top coat 28.

In one exemplary embodiment of the present disclosure, a basecoat includes a sacrificial material that can be relatively softer than the substrate material. The basecoat can include material properties that promote strength compliance and load carrying capability. In one form, the basecoat includes a copper-based composition. One or more intermediate layers of the anti-fret coating system 20 can include a fluoride compound that promotes additional load bearing capability, protects the basecoat and provides dry film lubrication capability. The top coat of the anti-fret coating system 20 can include a molybdenum disulfide compound for providing further dry film lubrication capability to the coating.

A basecoat deposited on the wear surface of the substrate can have a copper (Cu) based material composition. For example, the basecoat can include copper-based compositions that further include nickel, aluminum bronze, and other suitable sacrificial materials, to name a few. In another example, the basecoat can include a copper-nickel-indium material (CuNiln). Other Cu-based material compositions can be alternatives to CuNiln such as Copper-Nickel (CuNi), Copper-Aluminum (CuAl), Aluminum-Bronze (AlCuSn) or mixtures thereof and fall under the teachings and claims of this disclosure.

The basecoat can be applied on a substrate using application processes such as but not limited to plasma spray, detonation gun thermal spraying, high velocity oxygen fuel thermal spraying, chemical vapor deposition, physical vapor deposition and other such processes known in the art. In one embodiment, the thickness of the basecoat can be 50.8-304.8 µm (2-12 mils, wherein mil is an abbreviation for .001 inches). In a specific embodiment, the thickness of the basecoat can be 76.2-127 µm (3-5 mils).

One or more intermediate layers of coatings having dry film lubricating properties can be applied to form at least a portion of the dry film lubrication system according to some embodiments of the present disclosure. The intermediate coating layers can include at least one fluoride material. The fluoride material can provide a load bearing capacity to the dry film lubrication system. A layer of fluoride materials can carry load bearing stresses that enable increased durability and enhanced anti-fret performance of the dry film lubrication system. Examples of fluoride materials are calcium fluoride (CaF2) and barium fluoride (BaF2). The layer of fluoride material can include various ratios of one fluoride to another fluoride. One example is the eutectic composition of 62% BaF2 and 38% CaF2. Fluoride compositions defined by the present disclosure can be more environmentally compatible than prior art coating compositions.

Various application processes can be used to apply the one or more intermediate coating layers including a fluoride composition. Such application processes can include, but are not limited to, spraying, dipping, brushing, dry-powder tumbling, and other process known in the art. In one form, the fluoride layer can be applied with a silicone binder medium. In other forms, the fluoride layer can be applied using an application process including an air-spray and cure process. The intermediate coating can be applied in one or more layers having an applied thickness of approximately 7.62-101.6 µm (0.3-4 mils). In a specific embodiment, an intermediate layer can be applied to an approximate thickness of 20.32-50.8 µm (0.8-2 mils).

A top coat layer can be applied over the intermediate layer(s) to complete the dry film lubrication system according to the present disclosure. In one form, the top coat includes a material with molybdenum disulfide or molydisulfide (MoS2) in the composition. The top coat including molybdenum disulfide can have an environmentally compatible formulation such that the coating is more environmentally compatible than prior art top coat layers. For example the top coat can have properties that increase water solubility, increase flashpoint temperature, reduce levels of volatile organic compounds (VOC), among others relative to prior art top coat materials. The environmentally compatible composition does not include antimony, MEK, etc. As with the other coating layers, a variety of processes can be used to apply the top coat layer. Such application processes can include, but are not limited to, spraying, dipping, brushing, dry-powder tumbling, and other process known in the art. In further embodiments, a top coat including molydisulfide can be applied using an application process including an air-spray and cure process. In one embodiment, the thickness of the coating layer including molybdenum disulfide can be approximately 7.62-101.6 µm (0.3-4 mils). In a specific embodiment, the thickness of the coating layer including molybdenum disulfide can be approximately 20.32-50.8 µm (0.8-2 mils).

In a further embodiment, applying the dry film lubrication system can include applying multiple coating layers of material including fluoride and molydisulfide. In a yet further embodiment, applying a dry film lubrication system can include applying additional intermediate layers to serve various functions such as increasing load carrying ability, increasing durability, increasing toughness, increasing wear resistance, and increasing lubrication properties of the anti-fret coating system. Multiple intermediate layers can include a variety of material compositions or alternatively can each be comprised of the same material composition.

The present disclosure contemplates a procedure that reduces cost and material waste associated with repairing the anti-fret coating system. As the top coat and/or portions of the intermediate coating layers degrade below a defined condition, the lubricating properties of the coating will not function as designed and the coating will need to be repaired. In an extreme example it is contemplated that the top coat, intermediate coating and basecoat can be compromised if the anti-fret coating system is not inspected and repaired according to defined procedures and time guidelines. An existing coating layer can include a consistent material composition or alternatively one having portions of varying levels of material compositions. One example includes an existing top coat layer having a variable composition of molydisulfide and other material compositions due to wear and foreign object infiltration caused by the operation of a system.

An exemplary repair procedure can include removing an existing top coat layer before re-applying a portion of the dry film lubrication system. In another example of a repair procedure, an existing intermediate coating layer and an existing top coat layer can be removed before re-applying a portion of the dry film lubrication system. In yet another example of a repair procedure, an existing basecoat, an existing intermediate coating layer(s) and an existing top coat layer can be removed before re-applying the entire anti-fret coating system including the dry film lubrication system.

Repairing an existing coating system can include removing existing layers before applying a dry film lubrication system. The existing layers can include various components including layers of calcium fluoride and barium fluoride, layers of molydisulfide and other dry film lubricating materials either individually or in combination. Applying at least a portion of the dry film lubrication system following the removal of at least one of the existing layers can include the previously discussed materials, processes and thicknesses. In one embodiment, repairing an existing dry film lubrication system includes removing an existing layer having calcium fluoride and barium fluoride therein, removing an existing layer having molydisulfide therein, and applying at least one coating layer having calcium fluoride and barium fluoride therein and a coating layer having molydisulfide therein.

In another embodiment, the repair of an existing coating system can include an existing coating system that differs in material composition and form from the anti-fret coating system defined by the present disclosure. One or more layers of coating can be removed and replaced by portions of the anti-fret coating defined herein including the dry film lubrication system. The existing basecoat and existing dry film lubrication coating layers can have different material composition from those that are replacing them in the repair process. Repair application processes can include similar means as used in the initial coating procedure. These applications include, but are not limited to, plasma spray, detonation gun thermal spraying, high velocity oxygen fuel thermal spraying, vapor deposition, and the like.

Repairing an existing coating by removing intermediate and top coat layers and not the basecoat can provide cost savings. The material costs of the basecoat are typically greater than the material costs of the intermediate coating layer(s) and the top coat layer. In addition the processing costs to apply the basecoat are also greater than the costs to apply the intermediate layer(s) and top coat layer because the intermediate layer(s) and top coat layer can be applied with a low cost air-spray and cure process. The combination of relatively high material costs and processing costs associated with the basecoat provides measurable value in aspects of the repair procedure for the anti-fret coating system defined herein.

In an exemplary embodiment, an existing coating on a fan blade can be repaired according the repair procedure defined herein. The repair procedure can include removing one or more coating layers of the coating system on the fan blade. Removal of the one or more layers can include machine processing such as milling, grinding and the like as well as chemical or electro-chemical processing as known to those of ordinary skill in the art. The one or more layers can include the existing top coat layer, the existing intermediate coating layer(s) and/or the existing basecoat layer. After removal of one or more existing coating layers, the anti-fret coating system can be applied with methods described above. It should be understood that the repair procedure can be used to repair an entire wear surface of a component or alternatively can be used to repair only a portion of the wear surface of the component.

While the invention has been illustrated and described in detail in the drawings and foregoing description, the same is to be considered as illustrative and not restrictive in character, it being understood that only the preferred embodiments have been shown and described, the scope of the invention being defined by the claims that follow.

## Claims

1. A method comprising:
applying a dry film lubrication system to a basecoat having a copper based material positioned on a substrate, wherein said applying dry film lubrication system includes:
applying at least one intermediate coating layer having a calcium fluoride and barium fluoride material in a silicone binder over the basecoat; and
applying a top coat layer having a molybdenum disulfide material over the at least one intermediate coating layer.

2. The method of claim 1, further comprising:
optionally removing an existing intermediate coating layer, and
removing an existing top coat layer before said applying the dry film lubrication system.

3. The method of claim 1, further comprising:
removing an existing basecoat and applying another basecoat having a copper based material before said applying the dry film lubrication system.

4. The method of claim 3, further comprising:
applying the basecoat to an approximate thickness of 50.8-304.8 µm (2-12 mils) with at least one process selected from a group consisting of plasma spraying, detonation gun thermal spraying, and high velocity oxygen fuel thermal spraying;
applying the at least one intermediate coating layer to an approximate thickness of 7.62-101.6 µm (0.3-4 mils) with an air-spray and cure process; and
applying the top coat layer to an approximate thickness of 7.62-101.6 µm (0.3-4 mils) with the air-spray and cure process.

5. The method of claim 3, wherein the basecoat includes a material composition of Copper-Nickel-Indium (CuNiln).

6. A method comprising:
depositing a basecoat made from a copper based compound on a wear surface of a substrate;
depositing an intermediate coating layer made from a fluoride based compound on the basecoat; and
depositing a top coat made from a molybdenum disulfide based compound on the intermediate coating layer,
wherein the copper based compound includes at least one material selected from a group consisting of copper, copper-nickel, copper-nickel-indium, and aluminum bronze; and
wherein the fluoride based compound includes calcium fluoride and barium fluoride.

7. The method of claim 6, wherein the substrate includes a component operable in a gas turbine engine, in particular at least one of fan blade and a fan disk.

8. The method of claim 6, further comprising:
removing an existing top coat,
removing an existing intermediate coating layer,
optionally removing an existing basecoat from the wear surface of the substrate;
before depositing another basecoat made from CuNiln on the wear surface of the substrate;
depositing another intermediate coating layer including a calcium fluoride and barium fluoride material to the basecoat, and
depositing another top coat including molybdenum disulfide onto the intermediate coating layer.

9. An apparatus comprising:
a component having a wear surface;
a basecoat having a copper based composition positioned on the wear surface;
an intermediate coating including a calcium fluoride and barium fluoride composition positioned on the basecoat; and
a top coat including a molybdenum disulfide composition positioned on the intermediate coating.

10. The apparatus of claim 9, wherein the basecoat includes at least one material selected from a group consisting of copper, copper-nickel, copper-nickel-indium, and aluminum bronze.

11. The apparatus of claim 9, wherein the basecoat is formed at an approximate thickness of 76,2-127 µm (3-5 mils), the intermediate coating is formed at an approximate thickness of 20.32-50.8 µm (0.8-2 mils), and the top coat is formed at an approximate thickness of 20.32-50.8 µm (0.8-2 mils).

12. The apparatus of claim 9, further comprising:
a repaired region of the component having at least one of a removed basecoat,
a removed intermediate coating, and a removed top coat; and wherein the repaired region includes at least one of a replacement basecoat, a replacement intermediate coating, and a replacement top coat.

13. The apparatus of claim 9, wherein at least one of the basecoat, the intermediate coating and the top coat includes more than one layer of material addition.

14. The apparatus of claim 9, wherein the wear surface further includes at least one of a linear profile and a non-linear profile.

15. The apparatus of claim 9, wherein the component is operable in a gas turbine engine.

## Patentansprüche

1. Verfahren umfassend:
das Aufbringen eines Trockenfilm-Schmiersystems auf eine Grundschicht, welche Material auf der Basis von Kupfer aufweist und auf einem Substrat positioniert ist, wobei das Aufbringen des Trockenfilm-Schmiersystems umfasst:
Aufbringen zumindest einer Zwischenschicht, welche ein Calciumfluorid- und Bariumfluoridmaterial in einem Silikonbindemittel aufweist, auf die Grundschicht; und
Aufbringen einer Deckschicht, welche ein Molybdändisulfidmaterial aufweist, auf die zumindest eine Zwischenschicht.

2. Verfahren gemäß Anspruch 1, ferner aufweisend:
optionales Entfernen einer bestehenden Zwischenschicht, und
Entfernen einer bestehenden Deckschicht vor dem Aufbringen des Trockenfilm-Schmiersystems.

3. Verfahren gemäß Anspruch 1, ferner aufweisend:
Entfernen einer bestehenden Grundschicht und Aufbringen einer anderen Grundschicht, welche ein Material auf der Basis von Kupfer aufweist vor dem Aufbringen des Trockenfilm-Schmiersystems.

4. Verfahren gemäß Anspruch 3, ferner aufweisend:
Aufbringen der Grundschicht in einer ungefähren Dicke von 50,8 bis 304,8 µm (2-12 mils) mit zumindest einem Verfahren, das ausgewählt ist aus der Gruppe die aus Plasmasprühen, thermischem Spitzen mit Beschichtungskanone und Hochgeschwindigkeitsflammspritzen besteht;
Aufbringen zumindest einer Zwischenschicht in einer ungefähren Dicke von 7,52 bis 101,6 µm (0,3-4 mils) mit einem Druckluftspritz- und Aushärtungsverfahren; und
Aufbringen der Deckschicht in einer ungefähren Dicke von 7,62 bis 101,6 µm (0,3 - 4 mils) mit dem Druckluftspritz- und Aushärtungsverfahren.

5. Verfahren gemäß Anspruch 3, wobei die Grundschicht eine Materialzusammensetzung aus Kupfer-Nickel-Indium (CuNiln) aufweist.

6. Verfahren aufweisend:
Abscheiden einer Grundschicht aus einer Zusammensetzung auf der Basis von Kupfer auf einer Verschleißfläche eines Substrats;
Abscheiden einer Zwischenschicht aus einer Verbindung auf der Basis eines Fluorids auf der Grundschicht; und
Abscheiden einer Deckschicht aus einer Verbindung auf der Basis eines Molydändisulfids auf der Zwischenschicht,
wobei die Verbindung auf Kupferbasis zumindest ein Material aufweist, das ausgewählt ist aus der Gruppe, die aus Kupfer, Kupfer-Nickel, Kupfer-Nickel-Indium und Aluminium-Bronze besteht; und
wobei die Verbindung auf Fluoridbasis Calciumfluorid und Bariumfluorid aufweist.

7. Verfahren gemäß Anspruch 6, wobei das Substrat eine in einem Gasturbinenmotor, insbesondere zumindest entweder einem Ventilatorflügel oder einer Lüfterscheibe, einsatzfähige Komponente aufweist.

8. Verfahren gemäß Anspruch 6, ferner umfassend:
Entfernen einer bestehenden Deckschicht,
Entfernen einer bestehenden Zwischenschicht,
optionales Entfernen einer bestehenden Grundschicht von der Verschleißfläche des Substrats;
vor dem Abscheiden einer anderen Grundschicht aus CuNiln auf der Verschleißfläche des Substrats;
Abscheiden einer anderen Zwischenschicht, welche ein Calciumfluorid- und Bariumfluoridmaterial aufweist, auf der Grundschicht, und
Abscheiden einer anderen Deckschicht, welche Molybdändisulfid aufweist, auf der Zwischenschicht.

9. Vorrichtung aufweisend:
eine Komponente, die eine Verschleißfläche aufweist;
eine Grundschicht, die eine Zusammensetzung auf Kupferbasis aufweist und auf der Verschleißfläche positioniert ist;
eine Zwischenschicht, die eine Calciumfluorid- und Bariumfluorid-Zusammensetzung aufweist und auf der Grundschicht positioniert ist; und
eine Deckschicht, die eine Molybdändisulfidzusammensetzung aufweist und auf der Zwischenschicht positioniert ist.

10. Vorrichtung gemäß Anspruch 9, wobei die Grundschicht zumindest ein Material aufweist, das aus der Gruppe ausgewählt ist, die aus Kupfer, Kupfer-Nickel, Kupfer-Nickel-Indium und Aluminium-Bronze besteht.

11. Vorrichtung gemäß Anspruch 9, wobei die Grundschicht mit einer ungefähren Dicke von 76,2 - 127 µm (3-5mils), die Zwischenschicht mit einer ungefähren Dicke von 20,32 - 50,8 µm (0,8-2 mils) und die Deckschicht mit einer ungefähren Dicke von 20,32 - 50,8 µm (0,8-2 mils) gebildet ist.

12. Vorrichtung gemäß Anspruch 9, ferner aufweisend:
einen reparierten Bereich der Komponente mit zumindest entweder einer entfernen Grundschicht, einer entfernten Zwischenschicht oder einer entfernten Deckschicht; und wobei der reparierte Bereich zumindest entweder eine Ersatzgrundschicht, eine Ersatzzwischenschicht oder eine Ersatzdeckschicht aufweist.

13. Vorrichtung gemäß Anspruch 9, wobei zumindest entweder die Grundschicht, die Zwischenschicht oder die Deckschicht mehr als eine Schicht aus Materialzugabe aufweist.

14. Vorrichtung gemäß Anspruch 9, wobei die Verschleißfläche ferner zumindest entweder ein lineares Profil oder ein nicht-lineares Profil aufweist.

15. Vorrichtung gemäß Anspruch 9, wobei die Komponente in einem Gasturbinenmotor einsatzfähig ist.

## Revendications

1. Procédé comprenant les étapes de:
appliquer un système de lubrification à film sec sur une couche de base, qui comprend un matériau à base de cuivre, et qui est positionnée sur un substrat, dans lequel l'application du système de lubrification à film sec comprend les étapes de :
appliquer au moins une couche intermédiaire, qui comprend une substance de fluorure de calcium et une substance de fluorure de baryum dans un liant de silicone, sur la couche de base ; et
appliquer une couche de finition, qui comprend une substance de disulfure de molybdène, sur l'au moins une couche intermédiaire.

2. Procédé selon la revendication 1, comprenant en outre les étapes de:
enlever facultativement une couche intermédiaire existante, et
enlever une couche de finition existante avant d'appliquer ledit système de lubrification à film sec.

3. Procédé selon la revendication 1, comprenant en outre l'étape de :
enlever une couche de base existante et appliquer une autre couche de base, qui comprend un matériau à base de cuivre, avant d'appliquer le système de lubrification à film sec.

4. Procédé selon la revendication 3, comprenant en outre les étapes de :
appliquer la couche de base avec une épaisseur approximative comprise entre 50,8 et 304,8 µm (2-12 mils) par moyen d'au moins un procédé sélectionné dans un groupe composé de la projection de plasma, la projection thermique à pistolet de détonation et la projection thermique à la flamme supersonique à grande vitesse ;
appliquer la couche de finition avec une épaisseur approximative comprise entre 7,62 et 101,6 µm (0,3-4 mils) par moyen du procédé de pulvérisation à air comprimé et de durcissement.

5. Procédé selon la revendication 3, dans lequel la couche de base comprend une composition de matériau de cuivre-nickel-indium (CuNiln).

6. Procédé comprenant les étapes de :
déposer une couche de base fabriquée à partir d'un composé à base de cuivre sur une surface d'usure d'un substrat ;
déposer une couche intermédiaire fabriquée à partir d'un composé à base de fluorure sur la couche de base ; et
déposer une couche de finition fabriquée à partir d'un composé à base de disulfure de molybdène sur la couche intermédiaire,
dans lequel le composé à base de cuivre comprend au moins une substance sélectionnée dans un groupe composé de cuivre, de cuivre-nickel, de cuivre-nickel-indium et de bronze d'aluminium ; et
dans lequel le composé à base de fluorure comprend une fluorure de calcium et une fluorure de baryum.

7. Procédé selon la revendication 6, dans lequel le substrat comprend une composante utilisable dans un moteur de turbine à gaz, notamment au moins une pale de ventilateur ou un disque de ventilateur.

8. Procédé selon la revendication 6, comprenant en outre les étapes de :
enlever une couche de finition existante,
enlever une couche intermédiaire existante,
enlever facultativement une couche de base existante de la surface d'usure du substrat :
avant de déposer une autre couche de base fabriquée à partir de CuNiln sur la surface d'usure du substrat ;
déposer une autre couche intermédiaire comprenant une substance de fluorure de calcium et une substance de fluorure de baryum sur la couche de base ; et
déposer une autre couche de finition comprenant de la disulfure de molybdène sur la couche intermédiaire.

9. Dispositif comprenant :
une composante ayant une surface d'usure ;
une couche de base comprenant une composition à base de cuivre et positionnée sur la surface d'usure ;
une couche intermédiaire comprenant une composition de fluorure de calcium et de fluorure de baryum et positionnée sur la couche de base ; et
une couche de finition comprenant une composition de disulfure de molybdène et positionnée sur la couche intermédiaire.

10. Dispositif selon la revendication 9, dans lequel la couche de base comprend au moins une substance sélectionnée dans un groupe composé de cuivre, de cuivre-nickel, de cuivre-nickel-indium et de bronze d'aluminium.

11. Dispositif selon la revendication 9, dans lequel la couche de base est formée avec une épaisseur approximative comprise entre 76,2 et 127 µm (3-5 mils), la couche intermédiaire est formée avec une épaisseur approximative comprise entre 20,32 et 50,8 µm (0,8-2 mils) et la couche de finition est formée avec une épaisseur approximative comprise entre 20,32 et 50,8 µm (0,8-2 mils).

12. Dispositif selon la revendication 9, comprenant en outre :
une région réparée de la composante comprenant au moins une couche de base enlevée, une couche intermédiaire enlevée ou une couche de finition enlevée ; et la région réparée comprenant au moins une couche de base de remplacement, une couche intermédiaire de remplacement ou une couche de finition de remplacement.

13. Dispositif selon la revendication 9, dans lequel au moins la couche de base ou la couche intermédiaire ou la couche de finition comprend plus d'une couche d'addition de matière.

14. Dispositif selon la revendication 9, dans lequel la surface d'usure comprend en outre au moins un profil linéaire ou un profil non-linéaire.

15. Dispositif selon la revendication 9, dans lequel la composante est utilisable dans un moteur de turbine à gaz.
